# EUROPEAN PATENT APPLICATION

(11) **EP 1 341 347 A1**
(43) Date of publication of application: **03.09.2003**
(21) Application number: 03250509.1
(22) Date of filing: 28.01.2003
(51) Int. Cl.: H04L 12/28, H04L 12/24

(54) **Communicable coupling and monitoring system for electronic appliances**

(30) Priority: 31.01.2002 US 66143
(71) Applicant: Hewlett-Packard Company, Palo Alto, CA 94304 (US)
(72) Inventor: Adelman, Lonnie W., La Jolla, CA 92039 (US)
(74) Representative: Jackson, Richard Eric

(57) **Abstract**

The described embodiments relate to systems of communicably coupling electronic appliances and resultant methods. In one exemplary embodiment, the method couples an electronic appliance to a data transfer network (902). It monitors a status of a power supply of said electronic appliance (904) and transmits a signal on the data transfer network when said status changes (906).

## Description

### BACKGROUND

As electronic devices or appliances, such as computers, become more powerful, a great amount of effort has been spent to allow the appliances to share data with one another. Of the available systems, the IEEE 1394 serial bus network or "Firewire" thus far has proven to be one of the more efficient systems. The IEEE 1394 system allows high-speed data transfer between various IEEE 1394 compliant appliances attached to the system.

Unfortunately, the IEEE 1394 system still has shortcomings that limit its performance. Most notably, if an appliance connected to an IEEE 1394 system loses power, the other appliances remain unaware of this condition and may repeatedly send data to the effected appliance. This situation needlessly ties-up available bandwidth. Additionally, data that is routed through the effected appliance will be blocked and can cause data to be backed-up on the system.

### BRIEF DESCRIPTION OF THE DRAWINGS

The same numbers are used throughout the drawings to reference like features and components.
Fig. 1 is a perspective view of an exemplary printing appliance in accordance with one embodiment.
Fig. 2 is a block diagram of an exemplary printing appliance in accordance with one embodiment.
Fig. 3 is a block diagram of an exemplary computing appliance in accordance with one embodiment.
Fig. 4 is a diagram of an exemplary system in accordance with one embodiment.
Fig. 5 is a block diagram of exemplary component of a system in accordance with one embodiment.
Fig. 6 is a block diagram of exemplary component of a system in accordance with one embodiment.
Fig. 7 is a flow chart of an exemplary logic circuit in accordance with one embodiment.
Fig. 8 is a schematic of an exemplary logic circuit in accordance with one embodiment.
Fig. 9 is a flow chart showing steps in a method in accordance with one embodiment.

### DETAILED DESCRIPTION

### Overview

The described embodiments relate to a system that allows electronic devices or appliances to send data to one another. The described system can increase the efficiency of data transmission. Electronic devices can include computers, printers, digital cameras, and scanners among others. In one exemplary embodiment, the system may comprise an IEEE 1394 serial bus network. A bus is a transmission path on which signals are dropped off or picked up by electronic devices on the system. An IEEE 1394 serial bus is a bus complying with standards established by the Institute of Electrical and Electronics Engineers (IEEE). The system can include various IEEE 1394 compliant appliances that can be connected to the IEEE 1394 serial bus. The system also includes one or more circuit(s) for the appliance(s). The circuit(s) monitors a status of the appliance(s) to improve system performance.

The IEEE 1394 standard contains various protocols that require certain features of any appliance configured to the system. These features include IEEE 1394 compliant electrical devices that form an interface between the appliance and the serial bus. In some exemplary embodiments, these electrical devices comprise integrated circuit chips, though other suitable embodiments can be constructed. The electrical devices provide varying layers of functionality to the system. Two of the functional layers are termed the physical layer and the link layer.

The IEEE 1394 protocols for the physical layer and the link layer allow the circuit(s) to increase the performance of the system. The circuits can monitor a status of the appliance that can affect the system. In some exemplary embodiments, the monitored status can be a power supply status of the appliance. If the circuit detects a change in the power supply status of the appliance, it can cause an IEEE 1394 physical layer chip coupled to the circuit to reset. According to IEEE 1394 protocols, specifically the IEEE 1394 compliant integrated circuits specifications, a physical layer reset will cause a system bus reset that causes each appliance on the system to provide a self-identification (self-ID).

The self-ID data from each appliance includes a status report regarding the appliance's link layer functionality. The status report will indicate either that the link layer is active or inactive. In the case of an inactive link layer, the other appliances on the system will not send data to that appliance. This can prevent a functioning or active appliance from sending data repeatedly to a non-functioning or inactive appliance that cannot receive the data. Additionally, in the case of a power failure to an individual appliance, that appliance's physical layer can be switched to a secondary power supply provided by the system on IEEE 1394 compliant serial cables. This secondary power supply can allow data to flow through the inactive appliance's physical layer on a path from one active appliance to another. More information regarding IEEE 1394 technical specifications can be found at http://www.1394ta.org/Technology/Specifications/index.htm.

The various components described below may not be illustrated accurately as far as their size is concerned. Rather, the included figures are intended as diagrammatic representations to illustrate to the reader various concepts that are described herein.

### Exemplary Printer System

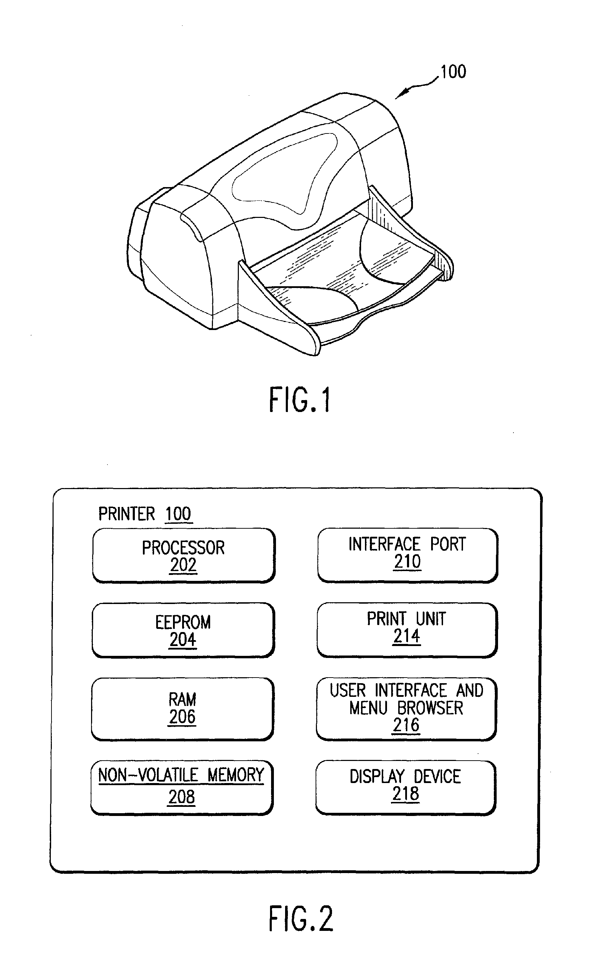

Fig. 1 depicts an exemplary appliance. In this illustration, the appliance is a printer 100. It will be appreciated and understood that the illustrated printer constitutes but one appliance or device and is not intended to be limiting in any way. Accordingly, other appliances can be used in connection with the inventive techniques and systems described herein. Additional exemplary appliances will be described below. These other appliances can have components that are different from those described below in relations to printer 100.

Fig. 2 is a block diagram showing exemplary components of a printing device in the form of a printer 100 in accordance with one embodiment. Printer 100 can include a processor 202, an electrically erasable programmable read-only memory (EEPROM) 204, and a random access memory (RAM) 206. Processor 202 processes various instructions necessary to operate the printer 100 and communicate with other devices. EEPROM 204 and RAM 206 store various information such as configuration information, fonts, templates, data being printed, and menu structure information. Although not shown in Fig. 2, a particular printer may also contain a ROM (non-erasable) in place of or in addition to EEPROM 204.

Printer 100 can also include a non-volatile read/write mass memory 208, and an interface port 210. The non-volatile memory 208 provides additional storage for data being printed or other information used by the printer 100. Although both RAM 206 and non-volatile memory 208 are illustrated in Fig. 2, a particular printer can contain either RAM 206 or non-volatile memory 208, depending on the storage needs of the printer. For example, an inexpensive printer may contain a small amount of RAM 206 and no non-volatile memory 208, thereby reducing the manufacturing cost of the printer. Interface port 210 provides a connection between printer 100 and a data communication network. The interface port 210 provides a data communication path between printer 100 and other appliances, such as a workstation, server, or other computing appliance. The interface port 210 can be an IEEE 1394 compliant serial bus port.

Printer 100 also includes a print unit 214 that includes mechanisms that are arranged to selectively apply ink (e.g., liquid ink, toner, etc.) to a print media (e.g., paper, transparencies, plastic, fabric, etc.) in accordance with print data within a print job. Thus, for example, print unit 214 can include a conventional laser printing mechanism that selectively causes toner to be applied to an intermediate surface of a drum or belt. The intermediate surface can then be brought within close proximity of a print media in a manner that causes the toner to be transferred to the print media in a controlled fashion. The toner on the print media can then be more permanently fixed to the print media, for example, by selectively applying thermal energy to the toner. Print unit 214 can also be configured to support duplex printing, for example, by selectively flipping or turning the print media as required to print on both sides.

Those skilled in the art will recognize that there are many different types of print units available, and that for the purposes of the present embodiments print unit 214 can include any of these various types. For example, the print unit can also be configured in an ink jet configuration where fluid ink is ejected from individual firing chambers.

Printer 100 may also contain a user interface/menu browser 216 and a display panel 218. User interface/menu browser 216 allows the user of the printer to navigate the printer's menu structure. User interface 216 may be a series of buttons, switches, or other indicators that are manipulated by the user of the printer. The printer display or display panel 218 is a graphical display that provides information regarding the status of the printer and the current options available through the menu structure.

### Exemplary Host Computer

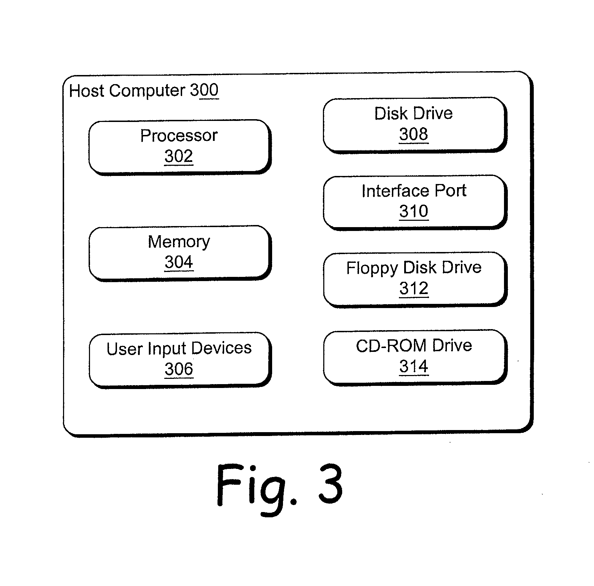

For purposes of understanding various structures associated with an exemplary host computer, consider Fig. 3. Fig. 3 is a block diagram showing exemplary components of a host computer 300. Host computer 300 may include a processor 302, a memory 304 (such as ROM and RAM), user input devices 306, a disk drive 308, interface port 310 for inputting and outputting data, a floppy disk drive 312, and a CD-ROM drive 314. Processor 302 performs various instructions to control the operation of computer 300. Memory 304, disk drive 308, and floppy disk drive 312, and CD-ROM drive 314 provide data storage mechanisms. User input devices 306 include a keyboard, mouse, pointing device, or other mechanism for inputting information to computer 300. Interface port 310 provides a mechanism for computer 300 to communicate with other devices. The interface port can be configured according to IEEE 1394 protocols. The computer described here can be one type of suitable computing device as it relates to the described embodiments, others can include but are not limited to personal computers, super computers, logic sequencers, state machines, and other appliances containing a computing device. Many commonly available electronic appliances can comprise computing devices.

### Exemplary Embodiment

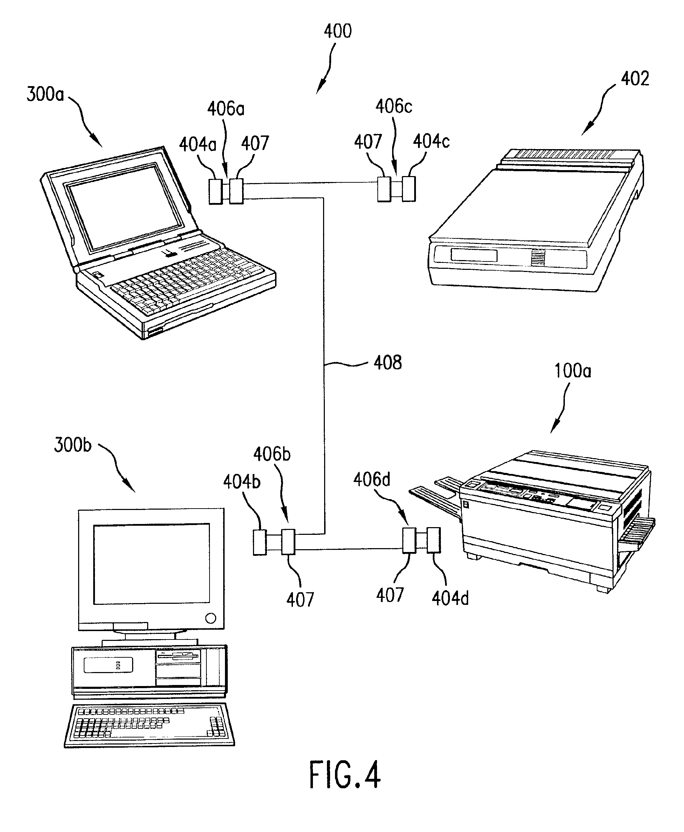

Figs. 4-6 show an exemplary system. In these exemplary embodiments, the system can comprise a network 400. As shown in Fig. 4, the network 400 can be an IEEE 1394 compliant network. The IEEE 1394 standard provides a high-speed network for connecting digital appliances and thereby providing a universal I/O connection or port. Fig. 4 shows four appliances. The appliances comprise a notebook or laptop computer 300a, a desktop computer 300b, a scanner 402, and a printer 100a. Each of the appliances is coupled to a circuit 404. In the illustrate embodiment, circuits 404a, 404b, 404c and 404d are coupled to notebook computer 300a, desktop computer 300b, scanner 402, and printer 100a respectively. The circuit(s) 404a-404d may comprise logic circuit(s), interface circuit(s), arbiter circuit(s), processing circuit(s), communications circuit(s), and/ or data conversion circuits or a combination thereof, among others. Various exemplary circuits will be discussed below. For the purposes of illustration, the circuits 404a-404d have been shown as separate distinct units, but as will be discussed below in other exemplary embodiments, the circuit's functionality may be incorporated onto other components.

In addition to being connected to a circuit, each of the appliances 100a, 300a, 300b, and 402 is connected to the system at a node, indicated generally herein as node 406. Node 406a, 406b, 406c, and 406d are coupled to appliances 300a, 300b, 402, and 100a respectively. Various sections of an IEEE 1394 compliant serial cable 408 connect the various appliances 300a, 300b, 402, and 100a at the nodes 406a, 406b, 406c, and 406d. A node, such as nodes 406a, 406b, 406c, and 406d, is considered a logical entity with a unique address on the system structure. Each node provides an identification ROM, a standardized set of control registers and its own address space. The node's functionality can comprise one or more IEEE 1394 compliant electrical devices 407 that form an interface between the appliance and the serial bus network. In some exemplary embodiments, these electrical devices 407 can comprise integrated circuits, though other suitable embodiments can be constructed.

Existing IEEE 1394 compliant networks may allow appliances, such as appliances 300a, 300b, 402, and 100a, to be added and removed from the network while the system is active. If an appliance is so added or removed the network will then automatically reconfigure itself according to IEEE 1394 protocols. This reconfiguration includes causing each appliance to generate a self-ID signal. The self-ID preferably contains data that allows each appliance to know what other appliances are on the network, the appliances' characteristics, and at what node they are located. This process will be discussed in more detail below.

The described embodiments allow individual appliances and corresponding IEEE 1394 compliant serial cable 408 to be added or removed as desired while the network remains functional. For example, a new appliance can be connected at any available node. With this type of configuration, any data that the new appliance sends or receives travels through the node of the appliance to which it is connected. Thus, intermediary appliances can serve as relays through which data passes between other appliances on the system. This daisy chain configuration can be seen in Fig. 4, where the scanner 402 is connected to the node at the notebook computer 300a. Another appliance can be connected to the scanner's node, etc.

This configurability allows the system to be continually adapted to new configurations. However, in earlier applications, data that travels through an intermediary node and appliance en route to a destination appliance can be blocked if the intermediary appliance becomes unavailable. For example, in previous configurations, data sent from desktop computer 300b to scanner 402 would travel through node 406a and notebook computer 300a. If the notebook computer 300a stopped functioning, from for example, losing its power supply, the data would be blocked at the notebook computer 300a and be unable to reach the scanner 402.

As mentioned above, existing IEEE 1394 networks provide some self-monitoring capabilities. The self-monitoring capabilities utilize the IEEE 1394 protocols and layered functionality. An IEEE 1394 network achieves its functionality by having various communication (protocol) layers, each of which performs a different function.

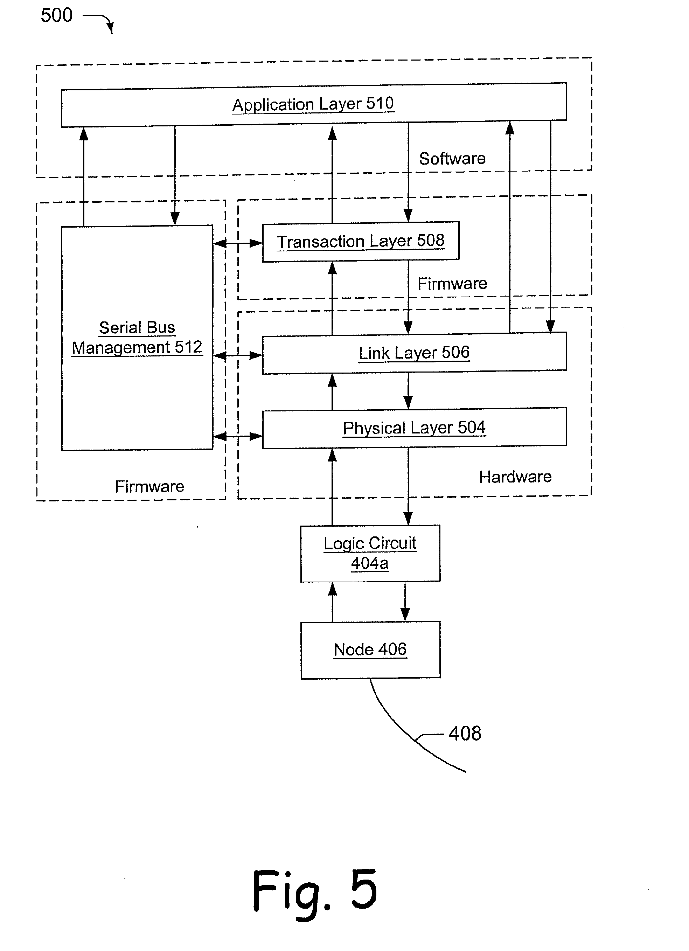

Fig. 5 shows various protocol layers 500 as they occur at each node in one exemplary embodiment. As can be seen, the protocol layers range from the physical layer 504, to the link layer 506, the transaction layer 508, and the application layer 510. The physical layer 504 and the link layer 506 comprise the hardware layers. The hardware layers are relatively non-configurable between applications whereas the upper layers, such as the transaction layer 508 and the application layer 510, are software based and can be configured for specific applications. There can also be a serial bus management layer 512 that manages the connection conditions for the connected appliances, their Ids, and the network configuration.

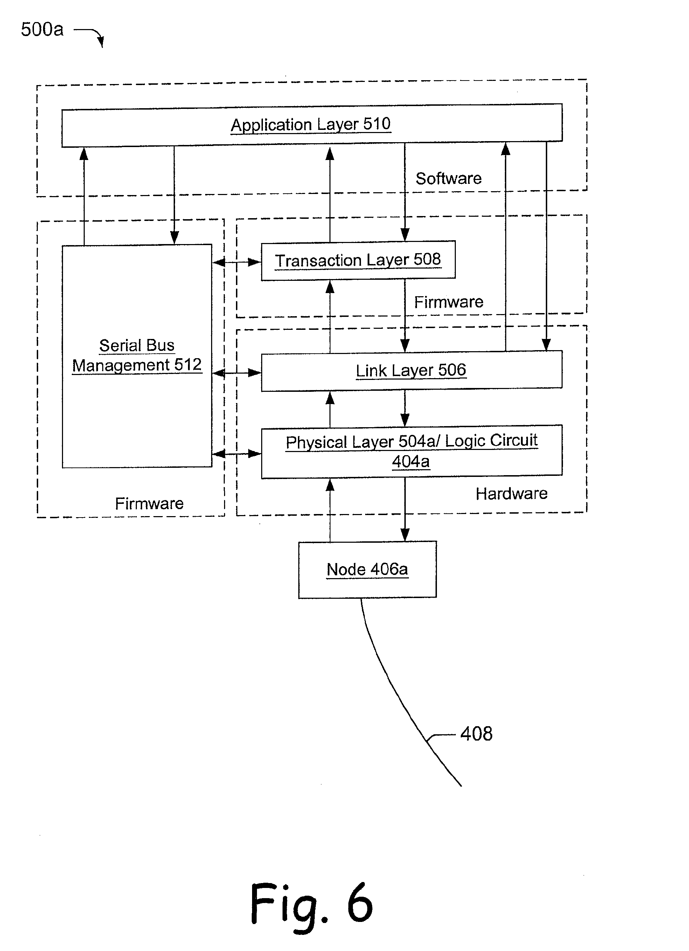

Fig. 6 shows another exemplary embodiment of the various protocol layers 500a. In this example, the logic circuit 404a is contained on the physical layer 504a. This can allow a single integrated circuit (chip) or die to perform the functions of the physical layer and of the circuit. Other alternative exemplary configurations can be constructed by the skilled artisan.

Referring again to Figs. 5 and 6, the physical layer 504 provides the electrical and mechanical connection between an appliance, such as notebook computer 300a, and the IEEE 1394 cable 408. The link layer 506 also comprises hardware and data transmission takes place between the appliances on the system 400 via the link layer.

At an individual appliance, such as notebook computer 300a, each of the different functional layers can be on a separate IEEE 1394 compliant chip. Alternatively, some or all of the layers can share a chip. IEEE 1394 chips are commercially available from various manufacturers, such as Texas Instruments, among others.

The IEEE 1394 system 400 can also provide power to an appliance's physical layer 504. The IEEE protocols allow the physical layer to supply approximately three watts (3w) to an appliance, such as notebook computer 300a. This is generally insufficient energy to power the entire appliance, but can allow portions of the appliance to remain functional. However, powering the physical layer 504 can allow data to pass through an unavailable appliance, such as one having a malfunctioning or deactivated power supply.

IEEE 1394 protocols require all appliances, such as 300a, 300b, 402, and 100a on the network 400 to conduct a self-ID when an appliance is added or removed from the network. However, the existing network is very limited in what conditions trigger a self-ID. For example, with the existing technology the various appliances comprising the network have no way of knowing if an appliance on the network becomes unable to receive data.

In this situation, an unaffected appliance(s) may send data repeatedly to the affected appliance since it has no way of knowing that the data cannot be received. Eventually, a time-out protocol should stop the sending appliance from further attempts to send the data, but during the interim, much of the network's potential bandwidth is needlessly and uselessly tied-up. In addition, as mentioned above, with the daisy chain configuration, data may have to travel through intermediary nodes on the way to a designated appliance. If one of these nodes is not functioning it can cause the data to be blocked at the non-functioning appliance.

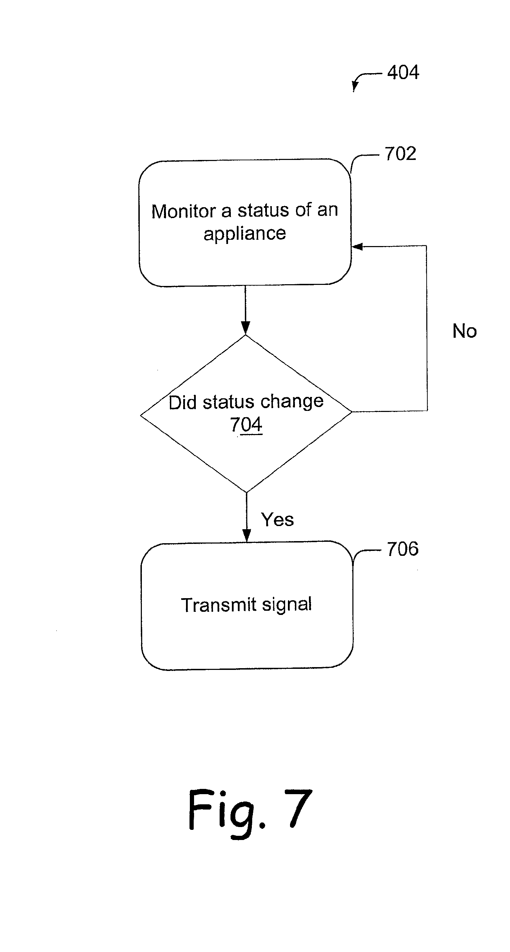

This problem can be minimized by increasing the information available to the various appliances on the network. One way this can be achieved is with the addition of circuit 404. The circuit can comprise a logic circuit, among others (non-limiting examples of which were given above). The logic circuit can improve the functionality of the IEEE 1394 compliant network by monitoring a condition of an appliance on the network. If a monitored condition changes as defined by the logic circuit, the logic circuit can indirectly make the information available to the other appliances on the system by utilizing the IEEE 1394 protocols. One way that this can be accomplished is shown in Fig. 7.

Fig. 7 shows an exemplary embodiment of the functionality of circuit 404 that can monitor a condition or status of an appliance 702 to which it is connected. In this exemplary embodiment, circuit 404 comprises a logic circuit. At 704, if the monitored condition changes, the circuit can provide notification of the condition to the other appliances on a network 706. If the condition did not change the circuit returns to 702. In this exemplary embodiment, the circuit can monitor a power supply status of the appliance. A change in the power supply status causes the circuit to provide a system notification of the change.

One way that the logic circuit can provide this notification is to utilize the protocols of the IEEE 1394 standard. Under the IEEE 1394 protocols, a reset condition of any physical layer chip will cause a reset condition of all appliances on the network. The reset condition includes a self-ID from each appliance and the self-ID includes a link layer status.

If the monitored appliance 702 looses power, the logic circuit 704 can cause a physical layer reset for that appliance. As discussed above, the physical layer reset will cause a system wide reset that causes all appliances to self-ID. If the monitored appliance has lost power, its link layer will be non-functional, and its self-ID will show that its link layer is non-functional or unavailable.

As described above, the affected appliance cannot receive data when its link layer is not functional. Given this information, the other appliances on the system then will not send data to the affected appliance, thus maintaining the available bandwidth for other data streams.

The logic circuit can also cause the affected appliance's physical layer to be powered by the system power so that data can flow through the affected device's physical layer to a destination appliance. For example, refer again to Fig. 4, if logic circuit 404a detects a drop in the power supply of notebook computer 300a, the logic circuit causes a reset of the appliance's physical layer 504. This reset causes a system wide reset that requires each appliance to self-ID. The self-ID from notebook computer 300a shows that its link layer 506 is down. If desktop computer 300b was going to send data to notebook computer 300a the link layer non-functional condition would allow it to take alternative action, such as storing the data until the notebook computer became available. Additionally, the logic circuit 404a having caused the physical layer chip to be switched to system power can allow scanner 402 to send data through the physical layer chip of notebook computer 300a thus allowing the system to remain functional.

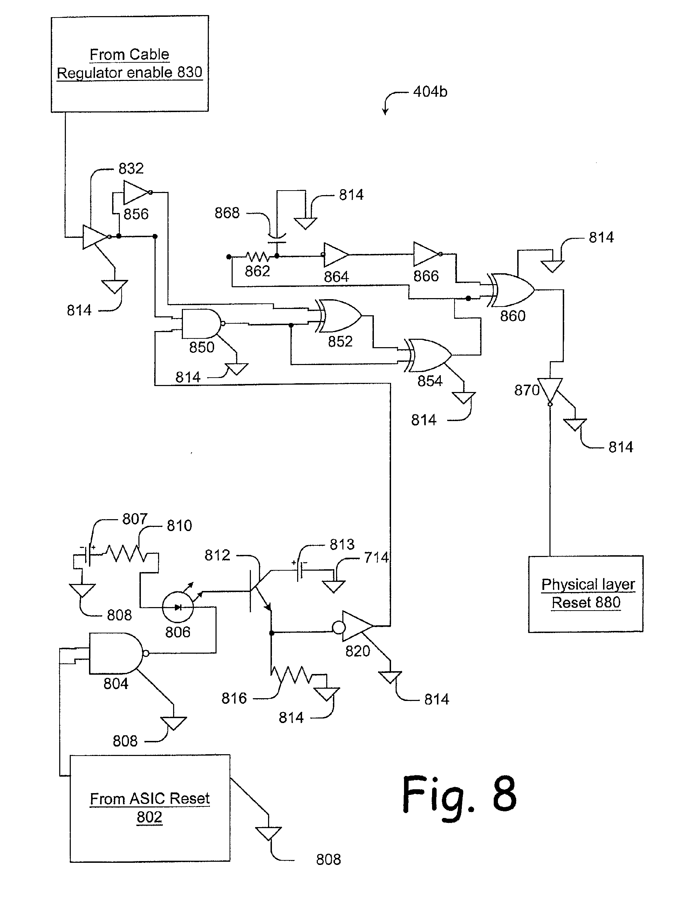

Fig. 8 shows one way of assembling an exemplary logic circuit 404b. This embodiment triggers a physical layer reset if the monitored appliance is powered up or powered down, or if physical layer is switched from primary to bus power. Other exemplary embodiments can be designed to trigger a reset based on other conditions. For example, a satisfactory embodiment can cause a reset only when the power supply goes down.

Referring specifically now to the embodiment shown in Fig. 8, an ASIC reset bar 802 from the printer controller chip is received at NAND gate 804. The output of the NAND gate 804 is coupled with opto-isolator 806. The opto-isolator also receives a signal from a 3.3-volt DC power supply 807 that is referenced to a digital common or ground 808. Between the power supply and the opto-isoltor lies a 1,000 ohm resistor 810. Both the ASIC reset 802 and NAND gate 804 are connected to digital common ground 808. The opto-isolator 806 ensures galvanic isolation between the digital common 808 and the physical layer common 814 in accordance with IEEE 1394 specifications and can otherwise be eliminated. The signal of the output of NAND 804 is optically transmitted by LED driver 806 to optical transistor 812. The transistor is driven by a 3.3 volt DC power supply 813 that is referenced to a physical layer common 814. The output of transistor 812 is connected to a 10,000 ohm resistor 816 that is connected to a physical layer common 814. The transistor output also goes to inverter 820 that is also connected to physical layer common 814. The output of the inverter 820 leads to one input of NAND gate 850.

A signal from the cable power regulator 830 is received at inverter 832 that is also connected to physical layer common 814. The output of the inverter 832 is connected to the second input of NAND gate 850. The output of NAND gate 850 is connected to the first input of XOR gate 852 and the first input of XOR gate 854. The output of the inverter 832 is also connected to inverter 856 that is connected to a second input of XOR gate 852. The output of XOR gate 852 is connected to the second input of XOR gate 854. Gates 850 and 854 are also coupled to the physical layer common 814.

The output of XOR gate 854 is coupled with a first input of XOR gate 860 along with the input of 100,000 ohm resistor 862. The second input of XOR gate 860 comes from the output of XOR 854 after having passed through 100k resistor 862, inverter 864, and inverter 866. Inverter 864 is also coupled with a 1-microfarad capacitor 868 that is connected to physical layer common 814. The output of XOR 860 goes to inverter 870 that is also connected to the physical layer common 814 and then to the physical layer 504 to cause a physical layer reset 880.

Thus in Fig. 8, the signal from the ASIC reset 802 comes from the controller chip in the printer or other appliance. When the signal goes to low that means the whole printer is getting reset. Such an example can be if the power plug is pulled from the socket. The other signal comes from the cable regulator enable 830. When power at printer 100a drops the system enables secondary power from the bus to come in via cable 408. With the use of XOR gate 860, either of these conditions causes the circuit 404 to cause a physical layer reset 880 to be generated.

This circuit 404 can monitor the status of the of an appliance's power. If that status changes, the circuit triggers a reset of the physical layer 504. More specifically, this embodiment is configured for use with an appliance having internal motors such as a printer 100a. This particular circuit monitors two conditions related to the appliance's power. The first condition is that of the motor control ASIC that monitors the power available to the printer's motor(s). If conditions occur that trigger an ASIC reset then the circuit 404 causes a physical layer reset. An example of such a condition can include but is not limited to a change in the motor supply power. The second condition is the status of the cable regulator. If primary power is lost and the physical layer 504 is switched to bus power then a physical layer reset 880 is triggered. Thus, in this configuration, which is just one of many possible embodiments, if either the printer is powered up or powered down, or if the bus cable power is activated then a physical layer reset is triggered. This functionality allows a reset to be generated when the printer power goes down and also allows a reset to be generated when the cable power comes on. In some exemplary embodiments, the cable power can be activated when the printer power has dropped below a normal operating range, but before the printer power falls all the way to zero. For example, a printer that normally operates at about 32 volts can lose motor function when the power drops below about 20 volts, and thus be non-functional. However, some of the circuitry can operate at these lower voltages and so may stay operational until the voltage falls to approximately zero. Thus, this configuration can allow a reset to be generated based on the cable power enable without the printer voltage having to fall to zero.

In this example, the appliance can normally be powered around 32 volts, the circuit can cause a physical reset if the power drops below around 12 volts. Alternatively, it can also cause a reset if the monitored voltage goes from less than about 9 volts to more than about 30 volts. Those of skill in the art will recognize other satisfactory power supply parameters as well as other satisfactory embodiments.

The physical layer reset will cause a bus or network reset that will cause all the appliances on the system to self-ID. If the circuit was triggered by a power down that appliance will self-ID to the network as being unavailable. The remaining appliances can use this information and not send data to the unavailable appliance.

As shown in Fig. 8, the circuit is comprised of separate distinct components. Other satisfactory embodiments provide the circuit on an integrated circuit board fabricated from a semiconductor material. The functionality of the circuit can alternatively be achieved as an ASIC (application specific integrated circuit). The ASIC can be located on a die. Other exemplary embodiments combine the functionality of the described circuit with the IEEE 1394 chip. For example, both functionalities can be combined on a single die. This combined functionality can be located on the appliance, or as a self-contained freestanding unit, among others.

The embodiments described above provide a dedicated circuit for each individual appliance connected to the system. Other exemplary embodiments can have fewer than all of the appliances equipped with the circuit. For example, connecting even one appliance on an IEEE 1394 network to a circuit as described above can be advantageous. It will be recognized by one of skill in the art that the exemplary embodiment described in Fig. 8 is but one satisfactory embodiment, and that many other satisfactory embodiments can be constructed.

### Exemplary Method

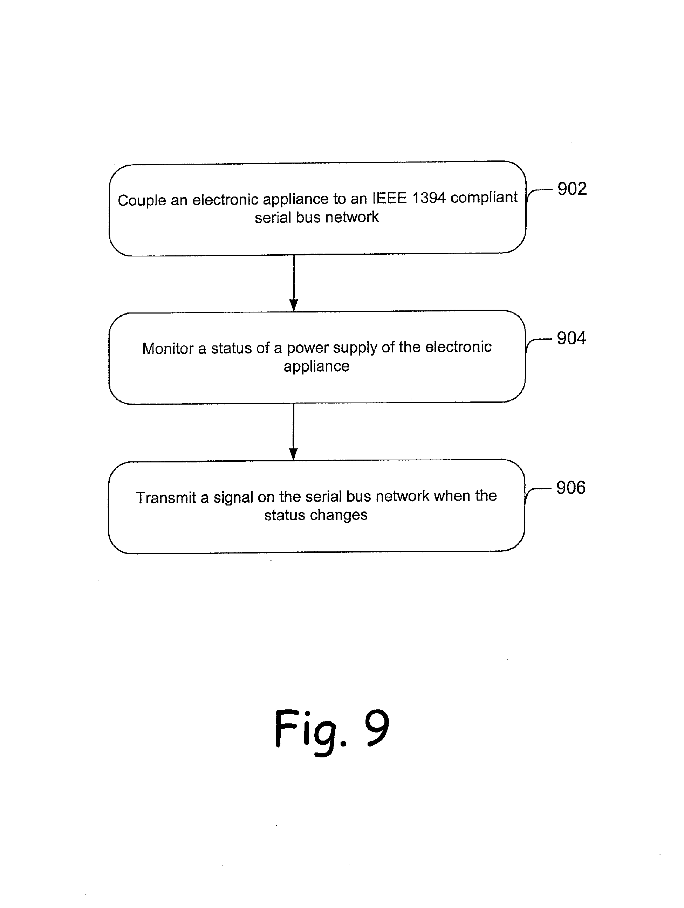

Fig. 9 is a flow chart depicting the steps in one exemplary embodiment. The following method can be implemented in any suitable hardware, software, firmware, or combination thereof. Step 902 couples an electronic appliance to an IEEE 1394 compliant serial bus network. The electronic appliance can be any type of appliance suitable for use with such a network.

Step 904 monitors a status of a power supply of the electronic appliance.

Step 906 transmits a signal on the serial bus network when the status changes. Fig. 8 shows but one exemplary circuit that can be used to implement steps 904 and 906. In one exemplary embodiment, the signal comprises a physical layer reset signal from the appliance. According to IEEE 1394 protocols, this signal can cause a network bus reset that requires each appliance on the network to self-ID. The self-ID can include a link layer status condition. An appliance that reports that its link layer cannot receive data and therefore the other appliances can be programmed to not send data to the appliance until it can report a functioning link layer.

### Conclusion

The described embodiments relate to a system that allows electronic devices or appliances to send data to one another. The described system can increase the efficiency of data transmission. Electronic devices can include computers, printers, digital cameras, and scanners among others. In one exemplary embodiment, the system may comprise an IEEE 1394 serial bus network. A bus is a transmission path on which signals are dropped off or picked up by electronic devices on the system. An IEEE 1394 serial bus is a bus complying with standards established by the Institute of Electrical and Electronics Engineers. The system can include various IEEE 1394 compliant appliances that can be connected to the IEEE 1394 serial bus. The system also includes one or more circuit(s) for the appliance(s). The circuit(s) monitors a status of the appliance(s) to improve system performance.

The IEEE 1394 standard contains various protocols that require certain features of any appliance configured to the system. These features include IEEE 1394 compliant electrical devices that form an interface between the appliance and the serial bus. In some exemplary embodiments, these electrical devices comprise integrated circuit chips, though other suitable embodiments can be constructed. The electrical devices provide varying layers of functionality to the system. Two of the functional layers are termed the physical layer and the link layer.

The IEEE 1394 protocols for the physical layer and the link layer allow the circuit(s) to increase the performance of the system. The circuits can monitor a status of the appliance that can affect the system. In some exemplary embodiments, the monitored status can be a power supply status of the appliance. If the circuit detects a change in the power supply status of the appliance, it can cause an IEEE 1394 physical layer chip coupled to the circuit to reset. According to IEEE 1394 protocols, specifically the IEEE 1394 compliant integrated circuits specifications, a physical layer reset will cause a system bus reset that causes each appliance on the system to provide a self-identification (self-ID).

The self-ID data from each appliance includes a status report regarding the appliance's link layer functionality. The status report will indicate either that the link layer is active or inactive. In the case of an inactive link layer, the other appliances on the system will not send data to that appliance. This can prevent a functioning or active appliance from sending data repeatedly to a non-functioning or inactive appliance that cannot receive the data. Additionally, in the case of a power failure to an individual appliance, that appliance's physical layer can be switched to a secondary power supply provided by the system on IEEE 1394 compliant serial cables. This secondary power supply can allow data to flow through the inactive appliance's physical layer on a path from one active appliance to another.

Although the invention has been described in language specific to structural features and/or methodological steps, it is understood that the invention defined in the appended claims is not necessarily limited to the specific features or steps described. Rather, the specific features and steps are disclosed as preferred forms of implementing the claimed invention.

## Claims

1. A method of operating electronic appliances (300a), comprising:
coupling an electronic appliance to a data transfer network (902);
monitoring a status of a power supply of said electronic appliance (904); and,
transmitting a signal on the data transfer network when said status changes (906).

2. A method according to claim 2, wherein said coupling an electronic appliance to a data transfer network comprises coupling an electronic appliance (300a) to an IEEE 1394 compliant serial bus network.

3. A method according to claim 3, wherein transmitting a signal comprises transmitting a physical layer reset signal (880) on the serial bus network.

4. A system for use with a network (400) in coupling appliances together, comprising a circuit (404) for monitoring a condition of an appliance (300a), wherein said circuit (404) is configured for use on the network and configured to utilize existing network protocols to provide data on the network regarding a change of the condition of the appliance (300a), where the data relates to a condition not included in the network protocols.

5. A system according to claim 4, wherein the condition is a power status condition.

6. A system according to claim 4, wherein the network (400) is an IEEE 1394 compliant serial bus network.

7. A system according to claim 4, wherein the appliance has a physical layer (504) and the circuit (404) causes a physical layer reset (880) when said change of condition is detected.

8. An electronic appliance (300a) configured for use on a network (400) comprising:
a processor (202); and, a circuit (404) for monitoring a power supply status of the electronic appliance (300a); wherein said circuit (404) is coupled with the processor (202) and configured to cause an appliance reset signal to be generated when a power status of the electronic appliance (300a) changes.

9. The electronic appliance of claim 8, wherein the appliance reset signal causes a network reset.

10. A system for communicably coupling electronic appliances (300a):
a network (400) for data transfer, said network having operating protocols; and,
at least one circuit (404) for monitoring a condition of an appliance (300a) not included in the operating protocols;
wherein said at least one circuit (404) is configured to be coupled with the network (400) and the electronic appliance (300a) and wherein said circuit (404) is configured to cause data regarding the monitored condition of the electronic appliance (300a) to be sent over the network (400) when a status of the electronic appliance (300a) changes.
